Europäisches Patentamt

European Patent Office

Office européen des brevets

(19)

(11) Publication number: **0 244 045 B1**

# EUROPEAN PATENT SPECIFICATION

(12)

(45) Date of publication of patent specification: **10.07.91**  (51) Int. Cl.⁵: **G01F 1/32, G01P 5/01**

(21) Application number: **87300383.4**

(22) Date of filing: **16.01.87**

(54) **Sensor arrangement for a vortex shedding flowmeter.**

(30) Priority: **03.02.86 US 825413**

(43) Date of publication of application:
**04.11.87 Bulletin 87/45**

(45) Publication of the grant of the patent:
**10.07.91 Bulletin 91/28**

(84) Designated Contracting States:
**DE FR GB IT SE**

(56) References cited:
**GB-A- 2 093 999**
**US-A- 4 094 194**
**US-A- 4 463 254**
**US-A- 4 552 026**

(73) Proprietor: **INTERNATIONAL CONTROL AUTO-
MATION FINANCE S.A.**
**16 Rue des Bains**
**Ville de Luxembourg(LU)**

(72) Inventor: **Knudsen, James Kenneth**
**8 Jodie Beth**
**East Greenwich Road Island 02818(US)**
Inventor: **Smith, Jane Ellen**
**8252 Findley Drive**
**Mentor Ohio 44060(US)**
Inventor: **Budan, Victor John**
**230 St. Lawrence Boulevard**
**Eastlake Ohio 44094(US)**
Inventor: **Wroblewski, David Joseph**
**1201 Cherokee Trail**
**Willoughby Ohio 44094(US)**
Inventor: **Skuratovsky, Eugene**
**6576 Maplewood Drive Apt. 203**
**Mayfield Hts. Ohio 44124(US)**

(74) Representative: **Purvis, William Michael
Cameron et al
D. Young & Co. 10 Staple Inn
London WC1V 7RD(GB)**

## Description

This invention relates to a sensor arrangement for a vortex shedding flowmeter.

When a non-streamlined body is placed in a stream of moving fluid, layers of slow moving fluid are formed along the outer surface of the body and are shed in the form of repeating vortices. In a uniform flow of fluid, the frequency of shedding of these vortices is related in a linear way to the fluid velocity.

Flowmeters which take advantage of the vortex shedding phenomenon have been proposed, for example, in patent specification US-A-4 171 643 which shows the use of a strain gauge for sensing the passage of vortices. The strain gauge is mounted on a sensor assembly which can be replaced.

Patent specification US-A-4 519 259 discloses a vortex shedding flowmeter which utilizes a light barrier to sense the passage of a vortex.

Various vortex shedding flowmeters are commercially available from companies such as Yokogawa, Foxboro, and Fisher & Porter. None of these available products, however, have in-line replaceable sensors, that is to say the sensors of these products cannot be replaced without interrupting or diverting to a bypass pipeline the flow of fluid being measured. Most manufacturers utilise some kind of electric sensor such as a piezoelectric sensor or strain gauge. These sensors are permanently installed in the sensing device, usually by welding. Because of this the entire device must be replaced if failure occurs in the sensor, either during manufacturing or operation.

Thus in previously proposed flowmeters failure of the sensing element during operation requires a shutdown in the process being measured or a bypass line and valves must be provided if interruption of the process is undesirable. In both cases large costs may be incurred. To replace the sensing element of the flowmeter it is necessary to disturb a pressure boundary.

Patent Specification GB 2 093 999 discloses a vortex shedding body pivotally mounted in a fluid flow to shed vortices and apply torque about a longitudinal axis, wherein a tube surrounds one end of a shaft pivotally mounting the body to provide a fluid seal and an external sensing mechanism in the form of a variable capacitor is provided to sense rotational movements of the shaft, the external sensing mechanism being replaceable without disturbing the fluid flow.

According to the invention there is provided a sensor arrangement for a vortex shedding flowmeter having a flowmeter housing which is exposed to a flowing fluid in a fluid space on one side of the flowmeter housing and the sensor on the other side of the housing, comprising:

a sensor housing defining a sensor space on the other side of the flowmeter housing;

a sensor beam connected for movement to the sensor housing and having an upper portion extending into the sensor space and a lower portion extending from the sensor housing into the fluid flow space outside the sensor housing;

pressure boundary means connected to the lower portion of the sensor beam for isolating the sensor space from the fluid space;

a mounting bracket detachably connected to the sensor housing; and

a sensor assembly including an optical fibre cable disposed in the sensor space between first and second cooperating jaws respectively mounted on the mounting bracket and the upper portion of the sensor beam for sensing movement of the sensor beam caused by vortices passing the lower portion of the sensor beam disposed in the fluid flow space, wherein the first jaw is detachably secured to the upper portion of the sensor beam and the sensor assembly is removable with the mounting bracket from the sensor housing without disturbing the pressure boundary maintained by the pressure boundary means.

Down-time due to failure of the sensor assembly can be minimized due to the simplicity and limited number of operations required to replace the sensor assembly.

The number of parts which must be scrapped may also be minimized. Generally in the case of a fibre optic microbend sensor, only the fibre optic cable itself and its connectors need be replaced.

In the preferred embodiment of sensor arrangement disclosed in detail below, it was found that a sensor assembly could be completely replaced in less than five minutes.

The invention is diagrammatically illustrated by way of example in the accompanying drawings in which:-

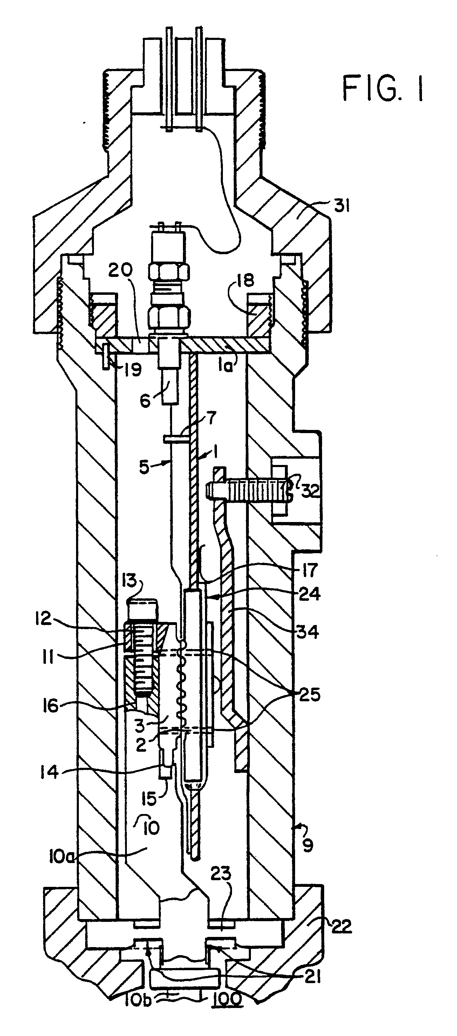

Figure 1 is a sectional view of a sensor arrangement for a vortex shedding flowmeter according to the invention, taken in a transverse direction with respect to a fluid flow to be measured by the vortex shedding flowmeter; and

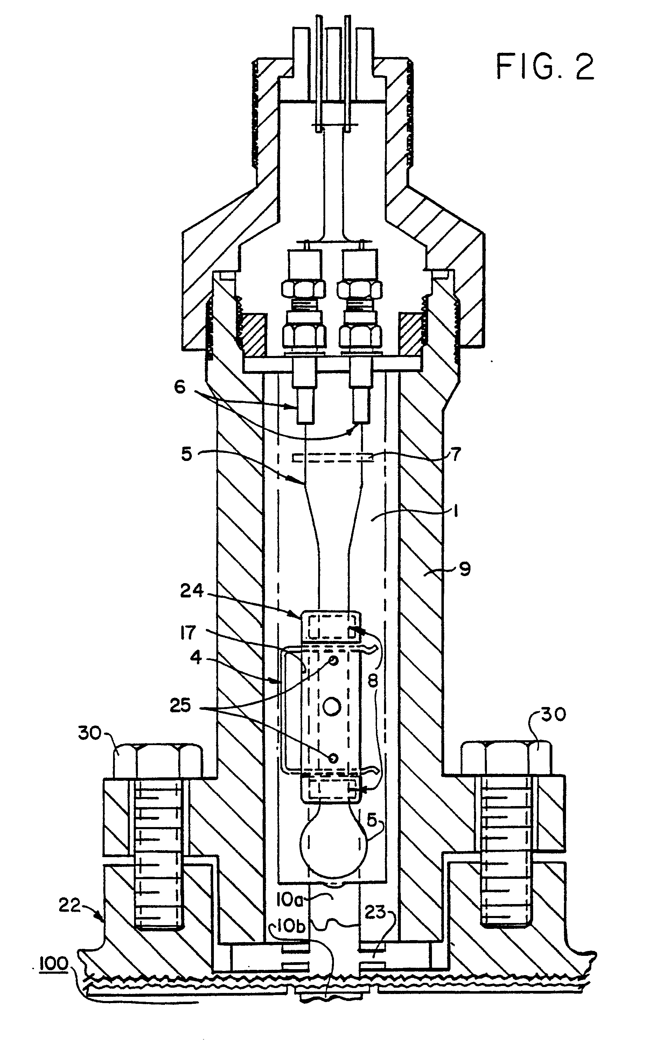

Figure 2 is a sectional view of the sensor arrangement shown in Figure 1, taken longitudinally to the flow direction.

Referring to the drawings, a vortex shedding flowmeter has a flowmeter housing 22 which is exposed in use to a flowing fluid in a fluid flow space 100 which is below the flowmeter housing 22 shown in the Figures. A substantially cylindrical sensor housing 9 is connected to the flowmeter housing 22 by bolts 30 and defines an inner sensor space.

A sensor beam 10 has an upper portion 10a which extends within the sensor space, and a lower portion 10b which extends through the flow meter housing 22 into the fluid flow space 100. A pressure boundary means, for example in the form of a flexible diaphragm 23, is connected between the sensor housing 9 and the flowmeter housing 22, to isolate the sensor space in the housing 9 from the fluid flow space 100 on another side of the flowmeter housing 22. The diaphragm 23 thus forms a pressure boundary 21 which, need not be disturbed even when a sensing element in the sensor housing 9 is replaced.

A sensor assembly 24 is detachably mounted in the sensor space of the sensor housing 9. It comprises a mounting bracket 1 which has an upper flange portion 1a that can be detachably fixed to the sensor housing 9. The sensor housing 9 includes an upper step which has a downwardly extending blind bore into which a pin 19 extends. The pin 19 is connected to the flange portion 1a and is used to establish a correct rotational position of the bracket 1 in the sensor housing 9. The upper flange portion 1a is detachably fixed to the sensor housing 9 by a lock nut 18 which is threaded into the upper end of the sensor housing 9. A cover 31 is threaded over the upper end of the sensor housing 9 to cover the sensor space.

The mounting bracket 1 forms a frame or fixture for holding the sensor assembly 24. The sensor assembly 24 includes a first microbend jaw 2 which is attached to the mounting bracket 1 by means of a spring 4. A second microbend jaw 3 is held to the jaw 2 with a fibre optic cable 5 located between the first and second jaws 2 and 3. The fibre optic cable 5 is in the form of a loop which terminates in connectors 6 which are attached to the flange portion 1a of the mounting bracket 1. The connectors 6 are used for coupling a light signal to circuitry (not shown) for analyzing light passing through the fibre optic cable 5. The fibre optic cable 5 is supported and positioned by a supporting tab 7 connected to the mounting bracket 1. This supporting tab 7 is located between the bottom of the connector 6 and the top of the jaws 2, 3. The fibre optic cable 5 is also held and positioned correctly in the jaw 2 by means of clamps 8. All of these components comprise an integral and independent subassembly unit which is placed in the sensor housing 9. The jaws 2, 3 are aligned to each other by means of slip pins 25.

The jaw 3 has a mounting tab 11 with a hole 12 therein to receive a mounting screw 13. In this way the jaw 3 is held fast to the upper portion 10a of the sensor beam 10. The jaw 3 also has a lip 14 which extends into a groove 15 of the sensor beam 10. A threaded hole 16 in the sensor beam 10 threadably receives the mounting screw 13.

When assembled, the jaw 3 is rigidly held with respect to the sensor beam 10 which serves as a mechanical input to the sensor assembly 24.

When vortices in the fluid space 100 pass the lower portion 10b of the sensor beam 10, the sensor beam 10 is caused to pivot about the diaphragm 23. This pivotal movement is transferred to the jaw 3 which, in co-operation with the jaw 2, squeezes and releases the fibre optic cable 5. This modulates light passing through the fibre optic cable 5. The modulations can be detected and correspond to the passage of the vortices.

An access hole 20 is provided in the flange portion 1a of the mounting bracket 1 to provide access to the mounting screw 13 for disconnecting the mounting tab 11 from the sensor beam 10. A hole 17 in the mounting bracket 1 is sized larger than the jaw 2 and receives the jaw 2. The hole 17, in conjunction with the spring 4, provides the necessary degree of freedom for self-alignment of the jaws 2, 3 with respect to the upper portion 10a of the sensor beam 10.

An adjustment screw 32 is threaded into the sensor housing 9 and permits adjustment of the position of a calibration arm 34 so that it bears down on the jaw 2 and provides an initial adjustment for the sensor assembly 24.

If the sensor assembly 24 becomes defective, it can easily be replaced by the following steps. First the cover 31 is removed and the mounting screw 13 which is accessed through the access hole 20 is unscrewed. This frees the jaw 3, and thus the whole sensor assembly 24, from the sensor beam 10. The lock nut 18 is then removed freeing the mounting bracket 1. The mounting bracket 1 is then removed along with the connectors 6, the jaws 2, 3 and all other parts connected to the bracket 1. A new sensor assembly 24 can then be inserted into the sensor housing 9. It is noted that this replacement operation does not disturb the pressure boundary 21 nor the lower portion 10b of the sensor beam 10.

With a new sensor assembly 24 in place calibration can be achieved by adjustment of the adjustment screw 32.

## Claims

1. A sensor arrangement for a vortex shedding flowmeter having a flowmeter housing (22) which is exposed to a flowing fluid in a fluid space (100) on one side of the flowmeter housing (22) and the sensor on the other side of the housing (22), comprising:

a sensor housing (9) defining a sensor space on the other side of the flowmeter housing;

a sensor beam (10) connected for movement to the sensor housing (9) and having an upper portion (10a) extending into the sensor space and a lower portion (10b) extending from the sensor housing (9) into the fluid flow space (100) outside the sensor housing;
pressure boundary means (23) connected to the lower portion (10b) of the sensor beam for isolating the sensor space from the fluid space (100);
a mounting bracket (1) detachably connected to the sensor housing (9); and
a sensor assembly (24) including an optical fibre cable (5) disposed in the sensor space between first and second cooperating jaws (2, 3) respectively mounted on the mounting bracket (1) and the upper portion (10a) of the sensor beam (10) for sensing movement of the sensor beam (10) caused by vortices passing the lower portion (10b) of the sensor beam (10) disposed in the fluid flow space (100), wherein the first jaw (2) is detachably secured to the upper portion (10a) of the sensor beam and the sensor assembly (24) is removable with the mounting bracket (1) from the sensor housing (9) without disturbing the pressure boundary maintained by the pressure boundary means (23).

2. A sensor arrangement according to claim 1, wherein the pressure boundary means comprises a diaphragm (23) connected to the lower portion (10b) of the sensor beam (10) and located between the sensor housing (9) and a flowmeter housing (22).

3. A sensor arrangement according to claim 1 or claim 2, wherein the sensor housing (9) has an opening near one end thereof, the mounting bracket (1) has a flange portion (1a) detachably seated in the opening, and the mounting bracket (1) includes a portion extending in the sensor space toward the upper portion (10a) of the sensor beam (10).

4. A sensor arrangement according to any one of claims 1 to 3, including calibration means (32, 34) fixed to the sensor housing (9) and engageable with one of the jaws (2) for calibrating the sensor assembly (24) located in the sensor housing (9).

5. A sensor arrangement according to claim 4 when appendant to claim 3, including a mounting tab (11) connected to the second jaw (3) and a threaded screw (13) connecting the mounting tab (11) to the upper portion (10a) of the sensor beam (10); the flange portion (1a) of the mounting bracket (1) including an access hole (20) therethrough for accessing the threaded screw (13).

6. A sensor arrangement according to claim 5, including a lock nut (18) threaded to a threaded portion of the open end of the sensor housing (9) for detachably securing the flange portion (1a) to the sensor housing (9), and an alignment pin (19) extending within the flange portion (1a) and in the sensor housing (9) for establishing a selected rotational position of the mounting bracket (1) in the sensor housing (9).

7. A sensor arrangement according to claim 3, wherein the optical fibre cable (5) is in the form of a loop depending from between the jaws (2, 3) and has ends extending to the flange portion (1a) of the mounting bracket (1), and a pair of connectors (6) are connected to the flange portion (1a) of the mounting bracket (1), each connector (6) being engaged with one end of the loop of the optical fibre cable (5).

**Revendications**

1. Un arrangement de capteur d'un débitmètre à émission de tourbillons comportant un boîtier de débitmètre (22) qui est au contact d'un fluide en mouvement dans un espace de fluide (100) d'un côté du boîtier de débitmètre (22) et un capteur de l'autre côté du boîtier de débitmètre (22), comportant :
un boîtier de capteur (9) délimitant un espace de capteur sur l'autre côté du boîtier de débitmètre ;
une verge de capteur (10) connectée de manière mobile au boîtier de capteur (9) et possédant une partie supérieure (10a) s'étendant dans l'espace de capteur et une partie inférieure (10b) s'étendant du boîtier de capteur (9) dans l'espace de fluide en mouvement (100) en dehors du boîtier de capteur ;
des moyens de confinement de pression (23) connectés à la partie inférieure (10b) de la verge de capteur et isolant l'espace de capteur de l'espace de fluide en mouvement (100);
un support de montage (1) connecté au boîtier de capteur (9) de manière démontable ; et
un ensemble capteur (24) comportant un câble de fibre optique (5) placé dans l'espace de capteur entre une première et une seconde mâchoires (2,3) respectivement montées sur le support de montage (1) et sur la partie supérieure (10a) de la verge de capteur (10) et captant le mouvement de la verge de capteur (10) provoqué par le passage de tourbillons sur la partie inférieure (10b) de la verge de capteur (10), cette partie inférieure étant placée dans l'espace de flux de fluide (100), dans lequel la première mâchoire (2) est fixée détachable de la partie supérieure (10a) de la verge de capteur et l'ensemble capteur (24) est démontable avec le support de montage (1) du boîtier de capteur (9) sans interruption du confinement de pression maintenu par les moyens de confinement de pression (23).

2. Un arrangement de capteur selon la revendication 1 dans lequel les moyens de confinement de pression comportent un diaphragme (23) relié à la partie inférieure (10b) de la verge de capteur (10) et placé entre le boîtier de capteur (9) et le boîtier de débitmètre (22).

3. Un arrangement de capteur selon la revendication 1 ou la revendication 2, dans lequel le boîtier de capteur (9) possède une ouverture près d'une de ses extrémités, le support de montage (1) possède une partie de collerette (1a) maintenue de manière démontable dans l'ouverture, et le support de montage (1) comporte une partie s'étendant dans l'espace de capteur vers la partie supérieure (10a) de la verge de capteur (10).

4. Un arrangement de capteur selon l'une quelconque des revendications 1 à 3, comprenant des moyens de calibration (32,34) fixés au boîtier de capteur (9) et aptes à prendre contact avec une des mâchoires (2) pour calibrer l'ensemble capteur (24) placé dans le boîtier de capteur (9).

5. Un arrangement de capteur selon la revendication 4 en dépendance de la revendication 3, incorporant une patte de montage (11) connectée à la seconde mâchoire (3) et une vis de montage (13) reliant la patte de montage (11) à la partie supérieure (10a) de la verge de capteur (10) ; la partie de collerette (1a) du support de montage (1) comportant un trou d'accès (20) à travers lequel la vis de montage (13) est accessible.

6. Un arrangement de capteur selon la revendication 5, comportant un écrou de blocage (18) vissé dans une portion filetée de la partie ouverte du boîtier de capteur (9) pour fixer de manière détachable la partie de collerette (1a) au boîtier de capteur (9), et un pion d'alignement (19) s'étendant dans la partie de collerette (1a) et dans le boîtier de capteur (9) pour établir une position angulaire prédéterminée du support de montage (1) dans le boîtier de capteur (9).

7. Un arrangement de capteur selon la revendication 3 dans lequel le câble de fibre optique (5) a la forme d'une boucle pendant entre les mâchoires (2,3) et possède des extrémités s'étendant jusqu'à la partie de collerette (1a) du support de montage (1), et deux connecteurs (6) sont connectés à la partie de collerette (1a) du support de montage (1), chaque connecteur (6) étant engagé sur une extrémité de la boucle du câble de fibre optique (5).

**Ansprüche**

1. Sensoranordnung für ein Wirbelablösungs-Strömungsmeßgerät mit einem Strömungsmeßgerätgehäuse (22), welches einem strömenden Fluid in einem Fluidraum (100) an einer Seite des Strömungsmeßgerätegehäuses (22) ausgesetzt ist, während ein Sensor sich an der anderen Seite des Gehäuses befindet, mit:

einem Sensorgehäuse (9), welches einen Sensorraum an der anderen Seite des Strömungsmeßgerätegehäuses definiert,

einem Sensorstab (10), der bewegbar mit dem Sensorgehäuse (9) verbunden ist und einen oberen Abschnitt (10a) hat, der sich in den Sersorraum hineinerstreckt sowie einen unteren Abschnitt (10b) hat, der sich von dem Sensorgehäuse (9) in den Strömungsraum (100) des Fluids außerhalb des Sersorgehäuses erstreckt,

einer Druckabgrenzungseinrichtung (23), welche mit dem unteren Abschnitt (10b) des Sensorstabes verbunden ist, um den Sensorraum von dem Fluidraum (100) zu isolieren,

einem Befestigungsträger (1), welcher lösbar mit dem Sensorgehäuse (9) verbunden ist, und

einem Sensoraufbau (24), welcher ein optisches Faserkabel (5) aufweist, das in dem Sensorraum zwischen ersten und zweiten zusammenwirkenden Klauen (2, 3) angeordnet ist, die jeweils an dem Befestigungsträger (1) und dem oberen Abschnitt (10a) des Sensorstabes (10) montiert sind, um eine Bewegung des Sensorstabes (10) abzufühlen, welche durch Wirbel verursacht wird, die an dem unteren Abschnitt (10a) des Sensorstabes (10), der in dem Strömungsraum (100) des Fluids angeordnet ist, vorbeistreichen, wobei die erste Klaue (2) lösbar an dem oberen Abschnitt (10a) des Sensorstabes befestigt ist und der Sersoraufbau (24) mit des Befestigungsträgers (1) aus dem Sensorgehäuse (9) herausnehmbar ist, ohne die Druckabgrenzung zu beeinträchtigen, welche von der Druckabgrenzungseinrichtung (23) aufrechterhalten wird.

2. Sensoranordnung nach Anspruch 1, wobei die Druckabgrenzungseinrichtung eine Membran (23) aufweist, die mit dem unteren Abschnitt (10b) des Sensorstabes (10) verbunden und zwischen dem Sensorgehäuse (9) und dem Gehäuse (22) des Flußmeßgerätes angeordnet ist.

3. Sensoranordnung nach Anspruch 1 oder 2, wobei das Sensorgehäuse (9) in der Nähe seines einen Endes eine Öffnung hat, der Befestigungsträger (1) einen Flanschabschnitt (1a) hat, der lösbar in der Öffnung sitzt, und der Befestigungsträger (1) einen Abschnitt aufweist, der sich in den Sensorraum in Richtung auf den oberen Abschnitt (10a) des Sensorstabes (10) erstreckt.

4. Sersoranordnung nach einem der Ansprüche 1 bis 3, einschließlich einer Kalibriereinrichtung (32, 34), welche an dem Sensorgehäuse (9) befestigt und mit einer der Klauen (2) in Eingriff bringbar ist, um den Sensoraufbau (24), der in dem Sensorgehäuse (9) angeordnet ist, zu kalibrieren.

5. Sensoranordnung nach Anspruch 4, soweit er auf Anspruch 3 zurückbezogen ist, einschließlich einer Befestigungslasche (11), welche mit der zweiten Klaue (3) verbunden ist und einschließlich einer Gewindeschraube (13), welche die Befestigungslasche (11) mit dem oberen Abschnitt (10a) des Sensorstabes (10) verbindet, wobei der Flanschabschnitt (1a) des Befestigungsträgers (1) ein Zugangsloch (20) aufweist, um Zugang zu der Gewindeschraube (13) zu gewähren.

6. Sensoranordnung nach Anspruch 5, einschließlich einer Befestigungsmutter (18), welche auf einen Gewindeabschnitt des offenen Endes des Sensorgehäuses (9) aufgeschraubt ist, um den Flanschabschnitt (1a) abnehmbar an dem Sensorgehäuse (9) zu befestigen, und einschließlich eines Ausrichtstiftes (19), der sich innerhalb des Flanschabschnittes (1a) und in das Sensorgehäuse (9) erstreckt, um eine ausgewählt gedrehte Stellung des Befestigungsträgers (1) in dem Sensorgehäuse (9) festzulegen.

7. Sensoranordnung nach Anspruch 3, wobei das optische Faserkabel (5) in Form einer Schleife vorliegt, welche von einer Stelle zwischen den Klauen (2, 3) herabhängt und Enden hat, die sich zu dem Flanschabschnitt (1a) des Befestigungsträgers (1) erstrecken, und wobei ein Paar von Anschlüssen (6) mit dem Flanschabschnitt (1a) des Befestigungsträgers (1) verbunden ist, wobei jeder Anschluß (6) mit einem Ende der Schleife des optischen Faserkabels (5) in Eingriff steht.

FIG. 1

FIG. 2